# EUROPÄISCHE PATENTANMELDUNG

(11) **EP 1 130 242 A2**
(43) Veröffentlichungstag der Anmeldung: **05.09.2001**
(21) Anmeldenummer: 01103392.5
(22) Anmeldetag: 14.02.2001
(51) Int. Cl.: F02G 5/00

(54) **Verfahren zur Steigerung des Wirkungsgrades von Blockheizkraftwerken und Blockheizkraftwerk**

(30) Priorität: 01.03.2000 DE 10009892
(71) Anmelder: Thyssen Energie-Systeme GmbH, 46047 Oberhausen (DE)
(72) Erfinder: Roth, Hans, Dr., 47259 Duisburg (DE)
(74) Vertreter: Vomberg, Friedhelm, Dipl.-Phys.

(57) **Zusammenfassung**

Zur Steigerung des elektrischen Wirkungsgrades bei motorbetriebenen Blockheizkraftwerken wird vorgeschlagen, die Enthalpie und den Methangehalt der Verbrennungsgase hinter dem Motor durch eine nachgeschaltete Rekuperation zur Erzeugung eines Synthesegases zu nutzen, das als Brenngas in den Verbrennungsmotor zurückgeführt wird.

## Beschreibung

Die Erfindung betrifft ein Verfahren zur Steigerung des Wirkungsgrades von Blockheizkraftwerken, die mit Verbrennungsmotoren betrieben werden, deren bei der Verbrennung entstehende Abwärme im Abgas als auch im Kühlwasser mittels Wärmetauschern zur Erzeugung von Heiz- und Prozeßwärme ausgenutzt wird.

Die Erfindung betrifft ferner ein verbrennungsmotorbetriebenes Blockheizkraftwerk.

Durch die nach dem Stand der Technik bekannte Kraft-Wärme-Kopplung, bei der die Kühlwasserwärme mit einem Temperaturniveau von ca. 90°C und die Abgaswärme mit einer Temperatur von ca. 400°C ausgenutzt werden, läßt sich der Wirkungsgrad, mit dem der Energiegehalt der fossilen Energieträger ausgenutzt wird, erheblich steigern, so daß nur noch Energieverluste von 13 bis 15 % auftreten. In vielen Anwendungsfällen der motorbetriebenen Blockheizkraftwerke wird jedoch das hohe Temperaturniveau der Abgaswärme weder benötigt noch hinreichend ausgenutzt.

Desgleichen ist unvermeidbar, daß bei nur unvollständiger Verbrennung der Wirkungsgrad minimiert wird.

Es ist daher Aufgabe der vorliegenden Erfindung, die Energiegehalte in fossilen Energieträgern mit einem höheren Wirkungsgrad auszunutzen.

Zur Lösung dieser Aufgabe werden die Enthalpie und der Restgehalt an nicht verbrannten gasförmigen Brennstoffen durch eine chemische Rekuperation zur Erzeugung eines Synthesegases bzw. -gasgemisches ausgenutzt, das als Brennstoff in den Verbrennungsmotor zurückgeführt wird. Im Gegensatz zu den nach dem Stand der Technik betriebenen Verfahren, bei denen der Exergiegehalt der Abgase (Rauchgase) nur eingeschränkt verwendet worden ist und die Rauchgase einer der Minimierung von schädlichen Bestandteilen dienenden Reinigung unterzogen worden sind, wird das hohe Temperaturniveau der Abgase dazu ausgenutzt, durch chemische Rekuperation Synthesegase zu erzeugen, die in den Verbrennungsmotor zurückgeführt und dort verbrannt werden können. Bei erdgasbetriebenen Motoren in Blockheizkraftwerken bedeutet dies, daß der nach dem Stand der Technik auftretende Methan-Schlupf, bei dem 2 bis 3 % des eingesetzten Brenngases unverbrannt mit den Verbrennungsgasen ungenutzt abströmte, erfindungsgemäß behoben wird. Vorzugsweise über eine sogenannte Dampfreformierung und/oder eine partielle Oxidation lassen sich Wasserstoff und Kohlenmonoxid herstellen. Chemische Rekuperationsverfahren sind nach dem Stand der Technik grundsätzlich bekannt, so daß auf vorhandene Erfahrungen bei der Synthesegasherstellung zurückgegriffen werden kann. Es ist allerdings für den Fachmann überraschend, daß sich auf dem Wege der chemischen Rekuperation die im Abgas noch enthaltenden, bisher ungenutzten Energieanteile wirtschaftlich nutzen lassen.

Vorzugsweise werden die Abgase, die Temperaturen von ca. 400°C bis 550°C aufweisen, auf Temperaturen ≥ 600°C, vorzugsweise 800°C bis 1000°C, erwärmt und ggf. Wasser bzw. Wasserdampf und Sauerstoffgemische zugegeben. Unter Verwendung eines Nickelkontaktes reagieren Methan und Wasser zu Wasserstoff sowie Kohlenmonoxid. Nicht umgesetztes Methan reagiert mit Sauerstoff ebenfalls zu Kohlenmonoxid sowie Wasserstoff. Zur Erwärmung der Abgase ist zwar ein Energieaufwand erforderlich, der beispielsweise durch Erdgasverbrennung bereitgestellt werden kann, jedoch geht dieser Heizwert nicht verloren bzw. kann durch die Verbrennung der Synthesegase wiedergewonnen werden.

Nach einer weiteren Ausbildung der Erfindung werden durch Druckerhöhung und/oder Einstellung der Gasanteile CH₄/H₂O bzw. CH₄/O₂ im Abgas die für die Synthesegaserzeugung optimalen Bedingungen eingestellt. Insbesondere durch die Druckerhöhung läßt sich somit vermeiden, daß die ansonsten (bei Normaldruck) für den Ablauf der Synthesegasreaktion hohen Temperaturen erzeugt werden müssen.

Zur Durchführung des genannten Verfahrens besitzt das eingangs beschriebene Blockheizkraftwerk einen chemischen Rekuperator mit entsprechenden Analysegeräten zur Ermittlung des unverbrannten Brennstoffgehaltes, entsprechenden Zuleitungen für die H₂O- und/oder O₂-Zufuhr sowie Rückführungsleitungen, über die die erzeugten Synthesegase in den Verbrennungsraum des Blockheizkraftwerk-Motors zurückgeführt werden.

Mit dem vorbeschriebenen Verfahren bzw. dem diesbezüglich aufgebauten Blockheizkraftwerk werden mit der verbesserten Brennstoffausnutzung fossile Ressourcen geschont, die thermodynamische Effizienz der Stromerzeugung gesteigert und schließlich die Atmosphäre von klimaschädigenden Treibhausgasemissionen entlastet. Quantitativ kann der elektrische Umwandlungswirkungsgrad von ca. 35 % auf mehr als 40 % gesteigert werden. Da über die Wärmekopplung zusätzlich ca. 53 % energetisch nutzbar sind, ergibt sich insgesamt eine Minimierung der Verluste auf weniger als 10 %.

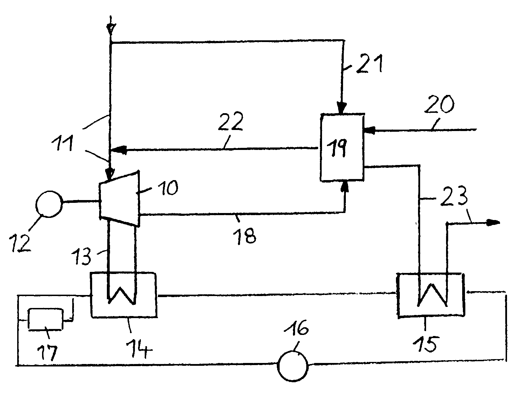

Ein Ausführungsbeispiel der Erfindung wird im folgenden anhand der Zeichnung beschrieben, die ein Prinzipschaltbild des erfindungsgemäßen Verfahrens bzw. Blockheizkraftwerkes zeigt.

Das Blockheizkraftwerk besitzt einen Verbrennungsmotor 10, dem über eine Zuleitung 11 der erforderliche Brennstoff, im vorliegenden Fall Erdgas, zugeführt wird. Die bei der Verbrennung erzeugte Wärme wird in nach dem Stand der Technik üblicher Art und Weise zum Betrieb eines Stromgenerators 12 verwendet. Die im Kühlwasserkreislauf 13 anfallende Wärme wird mittels eines Kühlwasser-Wärmetauschers 14 ebenso ausgenutzt wie die im Rauchgas enthaltene Wärme durch einen Rauchgas-Wärmetauscher 15. Die von diesen Wärmetauschern 14 und 15 gewonnene Wärme kann beispielsweise als Fern- oder Prozeßwärme einem Nutzer 16 zur Verfügung gestellt werden. Üblicherweise ist im Wärmekreislauf noch ein Notkühler 17 zur Vermeidung von Überhitzungen vorhanden.

Erfindungsgemäß wird das dem Motor bzw. dessen Verbrennungsraum entströmende Rauchgas, das noch Sauerstoffgehalt und nennenswerte CH₄-Restkonzentrationen aufweist, über eine Abgasleitung 18 einem chemischen Rekuperator 19 zugeführt. Der chemische Rekuperator besitzt eine Zufuhrleitung 20, über die wasser- und/oder sauerstoffhaltige Gase in den Reaktionsraum eingeführt werden. Zusätzlich ist eine Leitung 21 vorgesehen, über die Erdgas zuführbar ist, so daß im chemischen Rekuperator 19 die gewünschten Mischungsverhältnisse von Methan, Wasser und Sauerstoff einstellbar sind. Im chemischen Rekuperator können die Temperatur und der Druck geregelt bzw. gesteuert werden. Über die Zuleitung 22 wird das erzeugte Synthesegasgemisch mit wesentlichen Wasserstoffgehalten sowie Restgehalten an Methan, Kohlenmonoxid und Wasser zusammen mit dem Erdgas dem Verbrennungsraum des Motors 10 zurückgeführt. Vollständig verbrannte Bestandteile gelangen über die Abgasleitung 23, die auch den Rauchgas-Wärmetauscher aufweist, zur Rauchgaswäsche und von dort aus ins Freie.

## Patentansprüche

1. Verfahren zur Steigerung des Wirkungsgrades von Blockheizkraftwerken, die mit Verbrennungsmotoren (10) betrieben werden, deren bei der Verbrennung entstehende Abwärme im Abgas als auch die im Kühlwasserkreislauf (13) enthaltene Wärme mittels Wärmetauschern (14, 15) zur Erzeugung von Heiz- und Prozeßwärme ausgenutzt wird,
**dadurch gekennzeichnet,**
daß die Enthalpie und der Restgehalt an nicht verbrannten gasförmigen Brennstoffen durch eine chemische Rekuperation zur Erzeugung eines Synthesegases bzw. -gasgemisches ausgenutzt wird, das als Brennstoff in den Verbrennungsmotor (10) zurückgeführt wird.

2. Verfahren nach Anspruch 1, dadurch gekennzeichnet, daß die Abgase einer Dampfreformierung und/oder einer partiellen Oxidation unterzogen werden.

3. Verfahren nach Anspruch 2, dadurch gekennzeichnet, daß die Abgase, ggf. unter Zusatz H₂O- und/oder O₂-Gemischen, auf Temperaturen ≥ 600°C, vorzugsweise 800°C bis 1000°C, erwärmt werden.

4. Verfahren nach Anspruch 3, dadurch gekennzeichnet, daß durch Druckerhöhung und/oder Einstellung der Gasanteile CH₄/H₂O bzw. CH₄/O₂ im Abgas die für die Synthesegaserzeugung optimalen Bedingungen eingestellt werden.

5. Blockheizkraftwerk mit einem Verbrennungsmotor (10), dessen Abgase einem Wärmetauscher (15) zugeführt werden, gekennzeichnet durch einen chemischen Rekuperator (19) zur Erzeugung von Synthesegas bzw. eines Gasgemisches, das über eine Zufuhrleitung (22) in den Verbrennungsmotor (10) zurückgeführt wird.

6. Blockheizkraftwerk nach Anspruch 5, dadurch gekennzeichnet, daß die Zufuhrleitung (22) in die Erdgaszufuhrleitung (11) mündet, mit der dem Verbrennungsmotor (10) die Verbrennungsgase zugeführt werden.

7. Blockheizkraftwerk nach Anspruch 5 oder 6, dadurch gekennzeichnet, daß der chemische Rekuperator (19) einen heizbaren und/oder drucksteuerbaren Reaktionsraum besitzt.
